# EUROPEAN PATENT APPLICATION

(11) **EP 1 862 877 A1**
(43) Date of publication of application: **05.12.2007**
(21) Application number: 06011197.8
(22) Date of filing: 31.05.2006
(51) Int. Cl.: G05B 19/418

(54) **An industrial control system comprising wired and wireless communicating field devices with power backup**

(71) Applicant: ABB RESEARCH LTD., 8050 Zürich (CH)
(72) Inventor: Mathiesen, Mogens, 0380 Oslo (NO); Aakvaag, Niels, 0454 Oslo (NO)
(74) Representative: Dahlstrand, Björn

(57) **Abstract**

An industrial control system with a plurality of industrial field devices for controlling and monitoring an industrial process and each industrial field device is having first control functions and at least one industrial field device is having second control functions.

## Description

### TECHNICAL AREA

The present invention relates to an industrial control system and an industrial field device in an industrial control system for monitoring and/or controlling an industrial process.
The invention provides for wireless communication of second signals to/from the industrial field devices.

### TECHNICAL BACKGROUND

In an industrial plant the control system is used to control many of the industrial processes performed at the plant. Typically, the plant has a centralized control room having a computer system with user I/O, disc I/O, and other peripherals as are known in the computing art. Coupled to the computing system are a controller and a process I/O subsystem.
The process I/O subsystem includes a plurality of I/O ports which are connected to various field devices throughout the plant. Field devices known in the control art include various types of analytical equipment, pressure sensors, capacitive pressure sensors, resistive temperature detectors, power switches, thermocouples, strain gauges, limit switches, on/off switches, flow transmitters, pressure transmitters, capacitance level switches, weigh scales, transducers, valve positioners, valve controllers, actuators, solenoids, and indicator lights. As used herein, the term "field device" encompasses these devices, as well as any other device that performs a function in a distributed control system and is known in the control art.

Traditionally, analog field devices have been connected to the control room by current loops and the field devices are capable of responding to or transmitting an electrical signal within a specified range, typically a current of 4-20 milliamps. Recently, hybrid systems that superimpose digital data on the current loop have been used in distributed control systems and one hybrid system is known in the control art as the Highway Addressable Remote Transducer (HART). The HART protocol uses the magnitude of the current in the current loop to sense a process variable and also superimposes a digital carrier signal upon the current loop signal. HART is an industry standard nonproprietary system.

US 5,682,476 entitled "Distributed control system having central control providing operating power to wireless transceiver connected to industrial process control field device which providing redundant wireless access" describes an apparatus for providing redundant wireless access to field devices in a distributed control system. The abstract states:
The redundant wireless access provided by the present invention allows a control room operator to access field devices in the event of failure or unavailability of the hard-wired media that provides primary access to the field devices.

However, the field device wireless ports, as shown in fig 2 in US 5,682,476, are powered by the control data network to which the field device is connected. In the event of a failure or unavailability of the hard-wired media, the operating power of the field device wireless ports is lost. With no operating power for field device wireless port, the wireless communication is impossible and the redundant access to the field device is gone.

Another aspect of power supply arrangements is that the available power in the control data network is low and it might not be possible to continuously run the wireless port of a plurality of field devices on this power. Even if the available power in the control data network would be enough to continuously run one wireless port, the number of wireless ports that can continuously be operated at the same time on the same control data network line is strongly restricted.

Another aspect of using field devices in distributed control systems is that in order to configure field devices today, it is necessary for the operator to approach each device and program it using the Human-Machine Interface (HMI) placed on the instrument. This method to program field devices is time consuming

### OBJECT AND SUMMARY OF THE INVENTION

An object of a preferred embodiment of the present invention is to provide a second communication link with the field devices in an industrial control system over wireless transceivers. The second wireless transceiver connected to the industrial field device is powered by energy storage means which stores energy collected from the data network.
This object is achieved by an industrial control system as defined in claim 1.

The energy needs of the second wireless transceivers connected to the industrial field devices are further reduced by operating the transceivers non-continuous mode. This non-continuous mode of operation or transceiver duty cycling is a method to achieve low average energy consumption of the second wireless transceivers. The idea is that the transceivers are put in a low power mode for large portions of the time and powered up intermittently to communicate. This reduces the overall energy drain, whilst keeping the system open for communication and processing.

To program field devices using a handheld data device (for example a PDA) or directly from a terminal in the central control means over a wireless connection is more efficient than programming each field device on the Human-Machine Interface (HMI) placed on the field device.

According to an embodiment of the invention, an industrial control system wherein the second data signals comprises any form of non-control signal such as: configuration data, set-points, diagnostic data, identity, clock synchronisation.

According to an embodiment of the invention, an industrial control system wherein the second control means is a handheld device, for example, a mobile telephone or a PDA, which may be used for communicating with the field device.

According to an embodiment of the invention, an industrial control system wherein the second wireless transceivers arranged with the industrial field devices comprise means for communicating with each other and relaying information to first wireless transceiver.
According to an embodiment of the invention, an industrial control system wherein different types of networks (star, meshed or cluster-tree) are formed by inter-communicating transceivers.

According to an embodiment of the invention, an industrial control system wherein the first signal comprises, at least in part, compatible with any from the group of: Hart, FF, Ethernet, fieldbus (SP50), ISA SP100, ZigBee, WLAN.

According to an embodiment of the invention, an industrial control system wherein the energy storage means comprises any of rechargeable battery, accumulator, compulsator, storage capacitor.

According to an embodiment of the invention, an industrial control system wherein the energy storage means comprises a capacitor.

According to an embodiment of the invention, an industrial control system wherein part of the first respective signal path is arranged for transmission of analog signals only and the wireless signal path is adapted to communicate additional digital information sent to and received from modern field devices (as in communication protocol Highway Addressable Remote Transducer, HART or similar).

According to an embodiment of the invention, an industrial control system wherein the industrial field device, on failure or break-down of first signal path, is arranged for backup communication of first signal over wireless signal path.

### BRIEF DESCRIPTION OF THE DRAWINGS

The invention will be elucidated by reference to an embodiment partially illustrated in the drawings.
Fig. 1 illustrates a schematic diagram of two field devices connected to a fieldbus according to an embodiment of the invention.
Fig. 2 shows a schematic example of how the energy could be stored and how the power may be supplied to the transceivers according to an embodiment of the invention.
Fig 3 illustrates schematically the flow of current from the fieldbus and to the transceiver as it is powered up and powered down according to an embodiment of the invention.
Fig 4. illustrates a schematic arrangement of the wireless communication system according to an embodiment of the invention.
Fig 5. shows an example of how queries the described wireless system may communicate.
Fig 6. shows examples of different types of wireless communication networks that may be the result when different transceivers communicate with each other according to one or more embodiments of the invention.
Fig. 7 illustrates a schematic flow diagram according to an embodiment of the invention where the transceivers powered by the fieldbus are operated in a non-continuous mode.

### DETAILED DESCRIPTION OF THE EMBODIMENTS

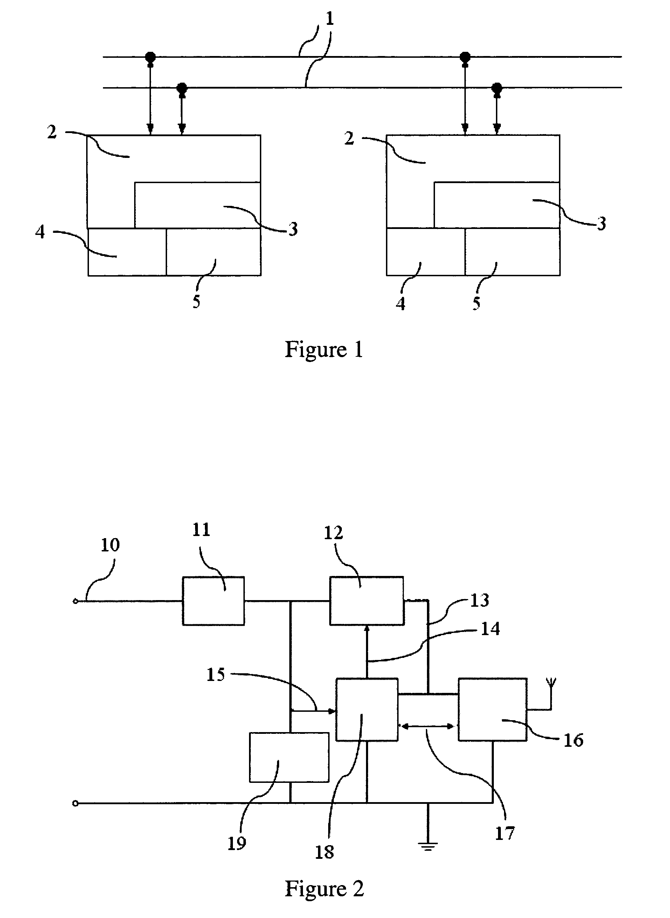

Fig 1. shows two schematic field devices connected to a fieldbus 1 with a physical interface 2 and a power storage means 3. The field device also contains a sensing module 4 and a wireless transceivers module 5.
The physical interface 2 connects to the fieldbus, receives and sends control data, and also draws off energy from the fieldbus. The energy is stored in a power storage means 3, which may be a capacitor, battery etc. The sensing module 4 performs one or more functions of the field device on the industrial process. Examples of field device functions are measuring of process variables, controlling processes and process flows. The wireless module 5 takes power from the power storage means and sends out wireless signals. The signals are sent out in a non-continuous mode with cyclic power-ups and power-downs of the wireless module 5.

Fig 2. illustrates a detail of one embodiment of the present invention with the wireless module and the power storage. The device is connected to the fieldbus 10 and a current limiter 11 regulates the size of the current that is drawn from the fieldbus. The power is stored in a storage means 19 which feeds the microprocessor 18 and a current regulator 12. The wireless radio device 16 is powered by the current regulator 12. The microprocessor 18 turns the current regulator 12 on and off. When the microprocessor 18 signals 14 "On" to the current regulator 12, the current starts to flow 13 into the wireless radio device 16 which is powered up and starts to communicate.

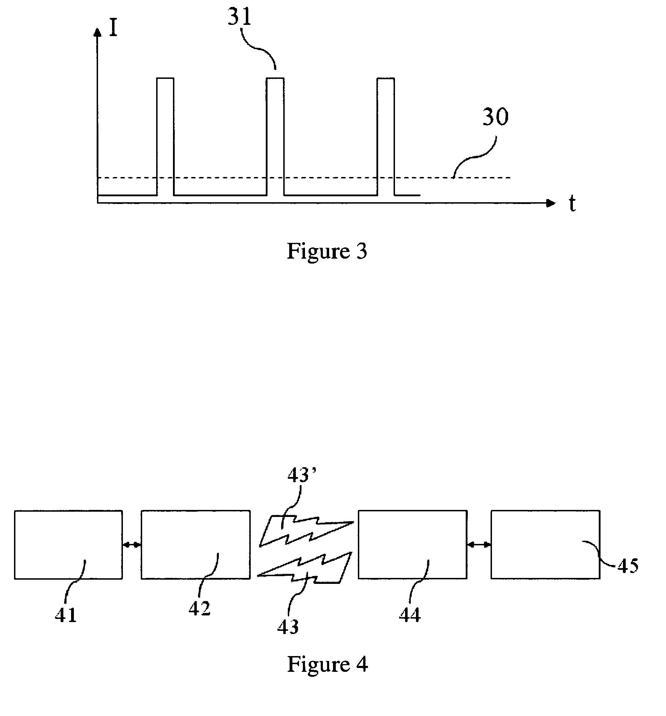

Fig 3. illustrates in a graph the schematic flow of current from the fieldbus into the power storage means and the schematic flow of current from the power storage means to the second transceivers. A continuous and small current 30 is drawn from the control system (fieldbus) and stored in the energy storage means. By the non-continuous operation of the transceivers the power drawn from the power storage 31 varies with time. The power used when the transceiver is turned off is lower than the current drawn from the fieldbus 31 and the excess current is stored in an energy storage means. When the transceiver is turned on, the current needed to operate the transceiver is higher that the current drawn from the fieldbus and the additional power is supplied by the built in energy storage means.

Fig 4. illustrates a schematic arrangement of the wireless communication system comprising; a field device 41, a transceiver 42 communicating 43, 43' with another transceiver 44 which can communicate with terminal 45. The terminal may be located in a central control means or the terminal may be a handheld data device or it may be another transceiver to build up a wireless meshed network.

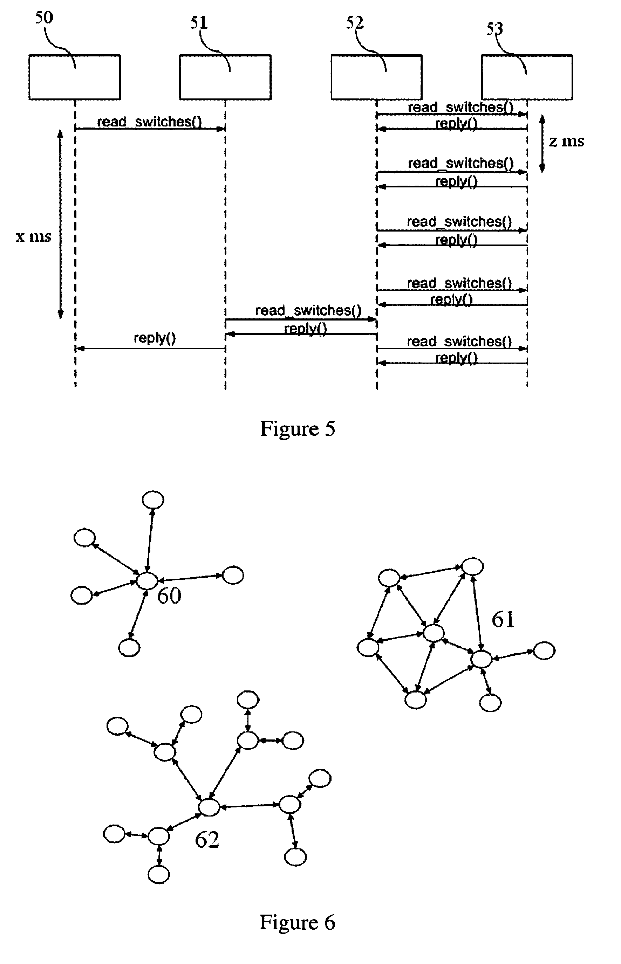

Fig 5 illustrates how messages may be passed between field devices and control means.
A sensing module 50 communicates with a field device transceiver 51 which communicates over a wireless network with another transceiver 52 which in turn can communicate with a control means 53 which may be a central control means or a handheld data device for example a PDA.

In this embodiment the message passed is "read_switches()" which is a call requesting the press state of the human-machine-interface (HMI) buttons on the control means 53. The call is passed from the sensing module 50 to the field device transceiver and stored in a message buffer until the wake up (after x ms time of inactivity) of the field device transceiver 51. When the field device transceiver 51 wakes up it associates with the control means transceiver 52 and the message is passed.
To make sure that the latest press state of the HMI of the control means 53 is available to the control means transceiver 52, it polls the control means 53 for status at a higher frequency than the frequency with which the field device transceiver is powered up and down. The last buffered state is thus sent to the field device transceiver 51 so that this may get a reply while it is still awake. The reply is then passed on to the sensing module 50 before the timeout of the field device transceiver occurs.

Fig 6 illustrates different types of network structures that may be used in an embodiment of the present invention.
A star network 60 is one where the control means connects to each field device directly. This network type is characterized by low power consumption. A mesh network 61 is one where each field device may connect to the control means and several other field devices. This network type is characterized by high level of reliability and scalability. A cluster-tree network 62 is a hybrid of the star/mesh topology. The cluster-tree network combines the benefits of the star network and the mesh network with low power consumption and a high level of reliability.

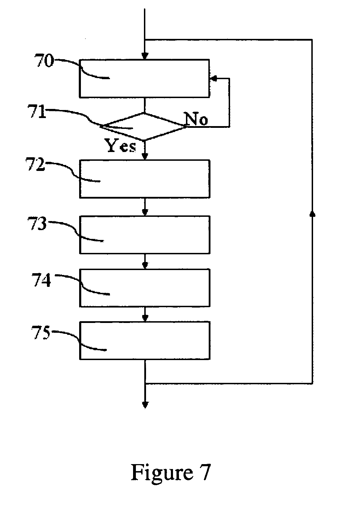

Fig 7 illustrates in a schematic flow diagram according to an embodiment of the invention how the transceivers, powered by the fieldbus, may be operated in a non-continuous mode. The method comprises:
Block 70 where the transceiver is idle and an internal device or microprocessor in the field device keeps track of the time. When a preset time has elapsed, the method continues to block 71, which is a check on the power level in the field device energy storage means. If the power level is not sufficient for operating the transceiver, the transceiver remains idle (return to block 70) or if the power level is sufficient for operating the transceiver the method continues to block 72 and the transceiver is powered up.
In block 73 the transceiver searches for a network coordinator or another network connection. When a network connection is established the method continues to block 74 where the transceiver starts to transmit and/or receive. After a predetermined time of communication, the method continues to block 75 where the transceiver is powered down and the method returns to the wait state in block 70.

## Claims

1. An industrial control system, comprising:
a plurality of industrial field devices for controlling and monitoring an industrial process, each industrial field device having first control functions and at least one industrial field device having second control functions;
first control means connected via a first respective signal path to each industrial field device to communicate first signals between the first control means and each industrial field device, for controlling the first control function; and
second control means connected via a second respective wireless signal path to at least one industrial field device to communicate second signals between the second control means via a first wireless transceiver and at least one industrial field device via a second wireless transceiver for controlling the second control function of at least one industrial field device,
**wherein**
a plurality of said industrial field devices are arranged with an energy storage means for storing energy drawn from said first respective signal path and said energy storage means supplies operating power for the second wireless transceiver.

2. An industrial control system, according to claim 1 wherein the energy use of the second wireless transceiver is arranged for non-continuous mode of operation, thereby minimizing energy use.

3. An industrial control system, according to claim 1 or 2 wherein the second data signals comprises any form of non-control signal such as: configuration data, set-points, diagnostic data, identity, clock synchronisation.

4. An industrial control system, according to claim 1 or 2 wherein the second control means is a handheld device, for example, a mobile telephone or a PDA, which may be used for communicating with the field device.

5. An industrial control system, according to claim 1 or 2 wherein the second wireless transceivers arranged with the industrial field devices comprise means for communicating with each other and relaying information to first wireless transceiver.

6. An industrial control system, according to claim 5 wherein different types of networks (star, meshed or cluster-tree) are formed by inter-communicating transceivers.

7. An industrial control system, according to claim 1 or 2 wherein the first signal comprises, at least in part, compatible with any from the group of: HART, FF, Ethernet, fieldbus (SP50), ISA SP100, ZigBee, WLAN.

8. An industrial control system, according to claim 1 or 2 wherein the energy storage means comprises any of rechargeable battery, accumulator, compulsator, storage capacitor.

9. An industrial control system, according to claim 8 wherein the energy storage means comprises a capacitor.

10. An industrial control system, according to claim 1 or 2 wherein part of the first respective signal path is arranged for transmission of analog signals only and the wireless signal path is adapted to communicate additional digital information sent to and received from modern field devices (as in communication protocol Highway Addressable Remote Transducer, HART or similar).

11. An industrial control system, according to claim 1 or 2 wherein the industrial field device, on failure or break-down of first signal path, is arranged for backup communication of first signal over wireless signal path.

12. An industrial field device, in an industrial control system comprising:
first control functions and second control functions, and
first control means connected via a first respective signal path to said industrial field device to communicate first signals between the first control means and said industrial field device, for controlling said first control function; and
second control means connected via a second respective wireless signal path to said industrial field device to communicate second signals between the second control means via a first wireless transceiver and said industrial field device via a second wireless transceiver for controlling said second control function of said industrial field device,
**wherein**
said industrial field device is arranged with an energy storage means for storing energy drawn from said first respective signal path and said energy storage means supplies operating power for said second wireless transceiver.

13. An industrial control device, according to claim 12 wherein the energy use of the second wireless transceiver is arranged for non-continuous mode of operation, thereby minimizing energy use.

14. An industrial control device, according to claim 12 or 13 wherein the second data signals comprises any form of non-control signal such as: configuration data, set-points, diagnostic data, identity, clock synchronisation.

15. An industrial control device, according to claim 12 or 13 wherein the second control means is a handheld device, for example, a mobile telephone or a PDA, which may be used for communicating with the field device.

16. An industrial control device, according to claim 12 or 13 wherein the second wireless transceivers arranged with the industrial field device comprise means for communicating with each other and relaying information to first wireless transceiver.

17. An industrial control device, according to claim 16 wherein different types of networks (star, meshed or cluster-tree) are formed by inter-communicating transceivers.

18. An industrial control device, according to claim 12 or 13 wherein the first signal comprises, at least in part, compatible with any from the group of: Hart, FF, Ethernet, fieldbus (SP50), ISA SP100, Zigbee, WLAN.

19. An industrial control device, according to claim 12 or 13 wherein the energy storage means comprises any of rechargeable battery, accumulator, compulsator, storage capacitor.

20. An industrial control device, according to claim 19 wherein the energy storage means comprises a capacitor.

21. An industrial control device, according to claim 12 or 13 wherein part of the first respective signal path is arranged for transmission of analog signals only and the wireless signal path is adapted to communicate additional digital information sent to and received from modern field devices (as in communication protocol Highway Addressable Remote Transducer, HART or similar).

22. An industrial control device, according to claim 12 or 13 wherein the industrial field device, on failure or break-down of first signal path, is arranged for backup communication of first signal over wireless signal path.

23. A method for wireless communication with one or more industrial field devices in a distributed industrial control system, said system comprising
a plurality of industrial field devices for controlling and monitoring an industrial process, each industrial field device having first control functions and at least one industrial field device having second control functions;
first control means connected via a first respective signal path to each industrial field device to communicate first signals between the first control means and each industrial field device, for controlling the first control function; and
second control means connected via a second respective wireless signal path to at least one industrial field device to communicate second signals between the second control means via a first wireless transceiver and at least one industrial field device via a second wireless transceiver for controlling the second control function of at least one industrial field device,
**wherein**
an energy storage means is supplying the operating power for said second wireless transceivers on said industrial field devices and said energy storage means draws energy from said first respective signal path

24. A method according to claim 23 wherein the method further comprises operating said second wireless transceivers in non-continuous mode, with cyclic power-up and power-down, and thereby minimizing energy use.

25. A method according to claim 23 or 24 wherein the method further comprises said second data signals is any form of non-control signal such as: configuration data, set-points, diagnostic data, identity, clock synchronisation.

26. A method according to claim 23 or 24 wherein the method further comprises communicating with said industrial field device with a handheld device, for example, a mobile telephone or a PDA.

27. A method according to claim 23 or 24 wherein the method further comprises said second wireless transceivers on the different industrial field devices communicating with other second wireless transceivers on the different industrial field devices and relaying information to first wireless transceiver of the second control means.

28. A method according to claim 27 wherein the method further comprises forming networks of the inter-communicating wireless transceivers of different types such as; star network, meshed network or cluster-tree network.

29. A method according to claim 23 or 24 wherein the method further comprises dividing analog/digital communication (as in communication protocol Highway Addressable Remote Transducer, HART or similar) to/from modern field devices so that the analog part of the communication is sent over first respective signal path and the digital part of the communication is sent over the wireless second respective signal path, allowing HART communication with modern field devices even if first respective signal path only can carry analog signals.

30. A method according to claim 23 or 24 wherein the method further comprises communication of first signal over the wireless second respective signal path for a short time when first respective signal path experiences a failure or break-down allowing for redundant emergency access to industrial field device.
